# EUROPÄISCHE PATENTSCHRIFT

(11) **EP 1 217 315 B1**
(45) Veröffentlichungstag und Bekanntmachung des Hinweises auf die Patenterteilung: **26.01.2005**
(21) Anmeldenummer: 01127975.9
(22) Anmeldetag: 24.11.2001
(51) Int. Cl.: F24J 2/48, F24J 2/26

(54) **Solarkollektorelement**
Solar collector element
Elément de collecteur solaire

(30) Priorität: 20.12.2000 DE 20021644 U
(43) Veröffentlichungstag der Anmeldung: 26.06.2002
(73) Patentinhaber: ALANOD Aluminium-Veredlung GmbH & Co. KG, 58256 Ennepetal (DE)
(72) Erfinder: Reichert, Werner, 42287 Wuppertal (DE); Gänz, Klaus, 42389 Wuppertal (DE)
(74) Vertreter: Patentanwälte Dr. Solf & Zapf

(56) Entgegenhaltungen:
- EP-A- 0 104 708
- EP-A- 0 107 412
- DE-A- 19 721 657
- US-A- 4 334 523
- US-A- 4 416 916
- US-A- 4 551 328
- PATENT ABSTRACTS OF JAPAN vol. 008, no. 080 (M-289), 12. April 1984 (1984-04-12) -& JP 58 224261 A (TOKYO SHIBAURA DENKI KK), 26. Dezember 1983 (1983-12-26)
- PATENT ABSTRACTS OF JAPAN vol. 010, no. 073 (M-463), 22. März 1986 (1986-03-22) -& JP 60 216148 A (FUJI DENKI SOUGOU KENKYUSHO:KK;OTHERS: 01), 29. Oktober 1985 (1985-10-29)
- DONNADIEU ET AL: "OPTICAL PERFORMANCE OF ABSORBER-REFLECTOR COMBINATIONS FOR PHOTOTHERMAL SOLAR ENERGY CONVERSION" JOURNAL OF THE OPTICAL SOCIETY OF AMERICA., Bd. 68, Nr. 3, März 1978 (1978-03), Seiten 292-297, XP002170687 AMERICAN INSTITUTE OF PHYSICS. NEW YORK., US

## Beschreibung

Die vorliegende Erfindung betrifft ein Solarkollektorelement mit einem Absorberteil und mit einem mit dem Absorberteil auf einer ersten Seite verbundenen Rohr für eine Wärmeträgerflüssigkeit, wobei das Absorberteil aus einem Verbundmaterial mit einem metallischen Träger und mit einer auf einer zweiten Seite des Absorberteiles auf dem Träger befindlichen optisch wirksamen Beschichtung besteht, entsprechend dem ersten Teil des Anspruchs 1.

Solarkollektoren werden bekanntermaßen zur Energiegewinnung aus der Sonnenstrahlung eingesetzt. Dabei wird die Sonnenstrahlung an einem beispielsweise plattenförmigen Absorberteil eines Solarkollektors in Wärme umgewandelt und erhitzt eine im Kollektor enthaltene Wärmeträgerflüssigkeit. Für die Wärmeträgerflüssigkeit ist ein aus Rohren bestehendes Kreislaufsystem vorhanden, das es ermöglicht, die aufgenommene Wärme wieder an einen Verbraucher, wie z.B. an einen Wärmetauscher, in dem Brauchwasser erwärmt werden kann, oder zur Heizung eines Schwimmbades abzugeben.

Allgemein teilt sich bei einem Objekt, auf das eine Strahlung auftrifft, - wie dies bei der beschichteten Oberfläche eines Absorberteils geschieht - diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Reflexionsvermögen, Absorptionsvermögen und Transmissionsvermögen sind optische Eigenschaften, die je nach der Wellenlänge einer einfallenden Strahlung (z.B. im Ultraviolett-Bereich, im Bereich des sichtbaren Lichts, im Infrarot-Bereich und im Bereich der Wärmestrahlung) für ein- und dasselbe Material unterschiedliche Werte annehmen können. Hinsichtlich des Absorptionsvermögens ist dabei das Kirchhoffsche Gesetz bekannt, wonach der Absorptionsgrad jeweils bei einer bestimmten Temperatur und Wellenlänge in konstantem Verhältnis zum Emissionsgrad steht. Somit sind für das Absorptionsvermögen auch das Wiensche Verschiebegesetz bzw. das Plancksche Gesetz sowie das Stefan-Boltzmann-Gesetz von Bedeutung, durch die bestimmte Zusammenhänge zwischen Strahlungsintensität, spektraler Verteilungsdichte, Wellenlänge und Temperatur eines sogenannten "Schwarzen Körpers" beschrieben werden. Bei Berechnungen ist zu beachten, daß der "Schwarze Körper" als solcher nicht existiert und reale Stoffe in je charakteristischer Weise von der Idealverteilung abweichen. Zur Gewährleistung einer hocheffektiven Energieausnutzung werden für Absorberteile im solaren Wellenlängenbereich (etwa 300 bis etwa 2500 nm) ein maximaler Absorptionsgrad und im Bereich der Wärmestrahlung (oberhalb etwa 2500 nm) ein maximaler Reflexionsgrad gefordert.

Unter dem Namen Tinox sind Absorber für Flachkollektoren bekannt, in denen Solarkollektorelemente der vorstehend beschriebenen Art mit beschichteten Absorberteilen, welche diese Forderung nach einer selektiven Absorption in hohem Maße erfüllen, zum Einsatz kommen. Das Material der Absorberteile besteht dabei aus einem Kupferband-Träger mit einer darauf aufgebrachten Schicht aus Titanoxynitrid und einer Deckschicht aus Siliciumdioxid. Das mit einem Absorberteil verbundene Rohr besteht ebenfalls aus Kupfer und ist mit dem Absorberteil verlötet.

Im Einzelnen unterscheidet man bei Solarkollektoren Niedrigtemperatur-Kollektoren mit Betriebstemperaturen bis zu 100 °C und Hochtemperatur-Kollektoren mit Betriebstemperaturen über 100 °C, wobei im Falle von sogenannten Tower-Anlagen, die zur Bereitstellung von Prozeßwärme dienen, die Absorbertemperatur bis zu 1200 °C betragen kann. Als charakteristische Größe für einen Solarkollektor wird häufig die sogenannte Stillstandstemperatur angegeben, worunter die maximale, theoretisch mögliche Einsatztemperatur eines Kollektors zu verstehen ist, bei der das Material im thermischen Gleichgewicht mit der Umgebung steht. Für die beschriebenen Tinox-Absorber sind Stillstandstemperaturen des Niedrigtemperaturbereichs charakteristisch. In höheren Temperaturbereichen besteht für das bekannte Solarkollektorelement mit der Tinox-Beschichtung oder auch mit anderen bekanntermaßen zum Einsatz kommenden Beschichtungen, wie schwarze Lacke oder pigmentierte Kunststoffe, die Gefahr, daß es zu Zersetzungen der Schicht, zu einem Ausgasen, aber zumindest zu einem relativ kurzfristigen Absinken der Leistungsfähigkeit des Kollektorelements kommt - bedingt beispielsweise durch ein Ausbleichen der Schwarzschicht.

Hinsichtlich der Verbindung zwischen Absorberteil und Rohr ist zu bemerken, daß diese neben der erforderlichen Festigkeit auch einen ausreichend hohen Wärmeübergang gewährleisten muß, wobei zu beachten ist, daß bei eventuell erwünschten Änderungen der Materialkombination Absorberteil/Rohr (nicht mehr Cu / Cu) Probleme hinsichtlich des Auffindens einer geeigneten Verbindungstechnik auftreten können.

Der vorliegenden Erfindung liegt die Aufgabe zugrunde, ein Solarkollektorelement der eingangs beschriebenen Art zu schaffen, mit dem einerseits eine hohe Lichtabsorption und ein hoher Reflexionsgrad im Bereich der Wärmestrahlung erreicht wird und das andererseits bei möglichst aufwandsarmer Herstellungsweise eine unter insbesondere stark thermisch beanspruchenden Betriebsbedingungen verbesserte Einsatzcharakteristik und längere Lebensdauer aufweist. Des weiteren soll durch die Erfindung auch eine optimale Problemlösung hinsichtlich der Gewährleistung einer festen mechanischen Verbindung und eines guten Wärmeübergangs zwischen dem Absorberteil und dem Rohr ermöglicht werden. Schließlich soll sich das Solarkollektorelement durch mögliche Stillstandstemperaturen im Einsatzbereich von Hochtemperatur-Kollektoren und auch durch eine hohe chemische Langzeitbeständigkeit auszeichnen.

Erfindungsgemäß wird dies dadurch erreicht, daß das Absorberteil und das Rohr auf der ersten Seite längs einer zwischen ihnen ausgebildeten Stoßstelle über eine stoffschlüssige, mittels eines Laserschweißverfahrens hergestellte Verbindung miteinander verbunden sind, die durch beidseitig des Rohres verlaufende Schweißnähte gebildet ist, welche aus voneinander beabstandeten Schweißpunkten bestehen.

Die aus drei Schichten bestehende optisch wirksame Beschichtung ist aufbringbar, indem auf umweltgefährende, zum Teil giftige, Salzlösungen bei der Herstellung verzichtet werden kann. So kann die metallische Schicht des optischen Mehrschichtsystems eine Sputterschicht oder eine durch Verdampfen, insbesondere durch Elektronenbombardement oder aus thermischen Quellen, erzeugte Schicht sein. Die beiden oberen Schichten der Beschichtung können ebenfalls Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sein, so daß das gesamte optische Mehrschichtsystem aus in Vakuumfolge, insbesondere in einem kontinuierlichen Verfahren, aufgetragenen Schichten besteht.

Bei der obersten Schicht kann es sich bevorzugt um eine siliciumoxidische Schicht der chemischen Zusammensetzung SiO_{y} handeln, wobei der Index y wiederum ein stöchiometrisches oder nichtstöchiometrisches Verhältnis in der oxidischen Zusammensetzung bezeichnet.

Neben einer hohen thermischen und chemischen Langzeitbeständigkeit zeichnet sich das erfindungsgemäße Solarkollektorelement auch aufgrund der guten Verarbeitbarkeit, insbesondere Verformbarkeit des Verbundmaterials, aus dem das Absorberteil hergestellt ist, vor allem bedingt durch den metallischen Träger, bei dem es sich um Kupfer oder bevorzugt um Aluminium handeln kann, durch eine aufwandsarme Herstellungsweise und hohe Wärmeleitfähigkeit aus. Letzteres ist insofern von besonderer Bedeutung, als dadurch die durch die Lichtabsorption aufgenommene Wärme schnell und mit hohem Wirkungsgrad auf die Wärmeträgerflüssigkeit übertragen werden kann.

Die genannten Verfahren zur Aufbringung des Schichtsystems gestatten es vorteilhafterweise auch, die chemische Zusammensetzung MeO_{z,} MeFᵣ, MeNₛ der obersten Schicht und die chemischen Zusammensetzung CrOₓ der chromoxidischen Schicht hinsichtlich der Indizes x, y, z, r und s nicht nur auf bestimmte, diskrete Werte einzustellen, sondern zwischen dem oxydierten Stoff und dem Sauerstoff ein stöchiometrisches oder nichtstöchiometrisches Verhältnis innerhalb bestimmter Grenzen fließend zu variieren. Dadurch können beispielsweise der Brechungsindex der reflexionsmindernden obersten Schicht, die auch ein Ansteigen der Werte für die mechanische Belastbarkeit (DIN 58196, Teil 5) bewirkt, und der Absorptionsgrad der chromoxidischen Schicht gezielt eingestellt werden, wobei mit zunehmendem Wert des Index x die Absorptionsfähigkeit abnimmt.

Erfindungsgemäß kann so ein nach DIN 5036, Teil 3 bestimmter Licht-Gesamtreflexionsgrad auf der Seite des optischen Mehrschichtsystems auf einen bevorzugten Wert von weniger als 5 % eingestellt werden, wobei neben einer hohen Alterungsbeständigkeit auch eine hohe thermische Stabilität gewährleistet werden kann - derart, daß bei einer Temperaturbelastung von 430 °C / 100 Stunden nur Änderungen von weniger als 7 %, vorzugsweise von weniger als 4 %, des vorhandenen Reflexionsgrades auftreten. Außerdem tritt bei einer solchen Temperaturbelastung vorteilhafterweise auch kein Ausgasen auf.

Das für das Absorberteil verwendete Verbundmaterial weist somit durch seine synergistisch wirkende Eigenschaftskombination
- der Trägerschicht, z.B. deren ausgezeichneter Verformbarkeit, mit der sie Beanspruchungen im Herstellungsprozeß des erfindungsgemäßen Solarkollektorelements bei den vorzunehmenden Formgebungsprozessen ohne Probleme widersteht, z.B. deren hoher Wärmeleitfähigkeit sowie - insbesondere im Falle von Aluminium als Trägermaterial - der Fähigkeit zu einer im Licht-Wellenlängenbereich zusätzlich absorptionsfördernden Oberflächengestaltung, der die anderen Schichten dann im Relief folgen, und außerdem mit einem Reflexionsvermögen im Bereich der Wärmestrahlung, das die Wirkung der metallischen Schicht des optischen Dreischichtsystems verstärkt;
- der metallischen Schicht, die durch ihre Konstituenten, die im Bereich der Wärmestrahlung ein hohes Reflexionsvermögen und damit eine geringe Emission aufweisen, der Tatsache Rechnung trägt, daß nach dem Gesetz von Lambert-Bouguer die Strahlungsleistung mit wachsender Eindringtiefe mit exponentieller Charakteristik absorbiert wird, und für die meisten anorganischen Stoffe schon in einer sehr geringen Tiefe (weniger als etwa 1 µm) als speicher bzw. weiterleitbare Wärmeenergie zur Verfügung steht;
- der chromoxidischen Schicht mit ihrer hohen Selektivität des Absorptionsgrades (Spitzenwerte über 90 % im Wellenleängenbereich von etwa 300 bis 2500 nm, Minimalwerte unter 15 % im Wellenlängenbereich > ca. 2500 nm) und ihrer bereits erläuterten Modifikationsfähigkeit (Index x) und
- der obersten, insbesondere siliciumoxidischen, Schicht, auf deren Vorteile schon vorstehend teilweise verwiesen wurde, und die neben ihrer entspiegelnden Wirkung auch ein hohes Transmissionsvermögen aufweist und dadurch den Anteil der chromoxidischen Schicht absorbierbaren Strahlungswerte im solaren Bereich erhöht;
eine ausgezeichnete Eignung für die Fertigung des erfindungsgemäßen Solarkollektorelements auf. So können unter Einsatz des erfindungsgemäßen Solarkollektorelements nicht nur Niedrigtemperatur-Kollektoren mit einer Betriebstemperatur bis zu 100 °C, sondern auch Hochtemperatur-Kollektoren hergestellt werden, wobei Stillstandstemperaturen oberhalb 250 °C möglich sind.

Unter dem optischen Mehrschichtsystem kann des weiteren auf dem Träger eine Zwischenschicht vorgesehen sein, die einerseits einen mechanischen und korrosionshemmenden Schutz für den Träger und andererseits eine hohe Haftung für das optische Mehrschichtsystem gewährleistet. Auf der dem optischen Mehrschichtsystem abgewandten Seite kann auf den Träger - ebenfalls als Schutzschicht - eine Unterschicht aufgebracht sein. Beide Schichten können im Falle eines Aluminiumträgers aus Aluminiumoxid bestehen, das aus dem anodisch oxidierten oder elektrolytisch geglänzten und anodisch oxidierten Trägermaterial herstellbar ist. Zusätzlich kann auf dem Träger bzw. auf der Unterschicht eine weitere Schicht mit reflexionserhöhender Wirkung aufgebracht werden.

Bei einem aus Aluminium bestehenden Trägermaterial des Absorberteils und einem Rohr aus Kupfer sind diese beiden Teile (auch bei Vorhandensein einer aus Aluminiumoxid bestehenden Schicht auf dem Träger) durch Laserschweißen miteinander verbunden. Dabei kommt es zu einer stoffschlüssigen Verbindung durch geschmolzenes und wiedererstarrtes Aluminium und durch eine Migration des Aluminiums in das Kupfer. Zum Verschweißen kann beispielsweise Strahlung eines CO₂- oder Nd-YAG-Lasers mit hinreichender Leistung eingesetzt werden.

Unabhängig von der Werkstoffkombination Absorberteil/Rohr weist der Einsatz des Laserverschweißens gegenüber dem Löten die Vorteile auf, daß unnötige metallische Grenzflächen ausgeschaltet werden können (kein Lot), daß eine höhere mechanische Festigkeit der Verbindung und damit ein größerer Widerstand gegen Vibration und Stöße erzielbar ist, daß sich die zulässige Betriebstemperatur (Stillstandstemperatur) des erfindungsgemäßen Absorberteils erhöht und daß eine größere Betriebssicherheit gewährleistet ist.

Das Rohr und das Absorberteil sind längs ihrer Stoßstelle durch beidseitig des Rohres verlaufende Punkt-Schweißnähte verbunden . Dabei ist bei der Festlegung der Laserleistung und Impulsfrequenz zu beachten, daß die Schweißpunktabmessungen in erster Linie von der Wärmeleitung abhängig sind, wobei Oberflächentemperatur, Bestrahlungszeit, Dicke des Absorberteils und Werkstoffart sich gegenseitig beeinflussende Faktoren darstellen. Zwischen der Aufschmelztiefe und der gemittelten Laserleistung besteht Proportionalität.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen:

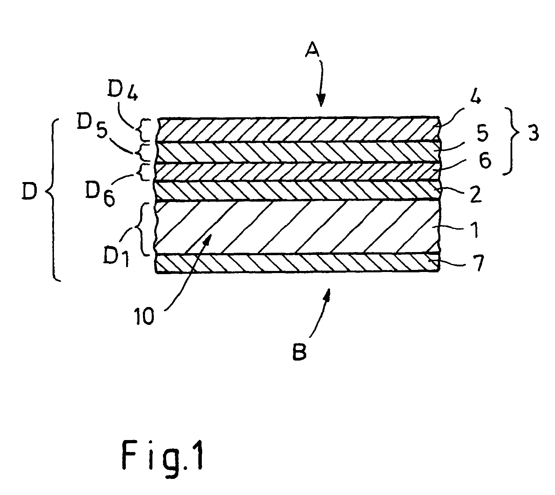

- Fig. 1: eine prinzipielle Schnittdarstellung durch ein Absorberteil eines erfindungsgemäßen Solarkollektorelements,
- Fig. 2: in perspektivischer Darstellung, einen Bereich einer Ausführungsform eines erfindungsgemäßen Solarkollektorelements,
- Fig. 3: in der Draufsicht, eine Ausführungsform eines erfindungsgemäßen Solarkollektorelements mit mäanderförmiger Rohrführung.

In den verschiedenen Figuren der Zeichnung sind dieselben Teile auch stets mit denselben Bezugszeichen versehen und werden daher in der Regel auch jeweils nur einmal beschrieben.

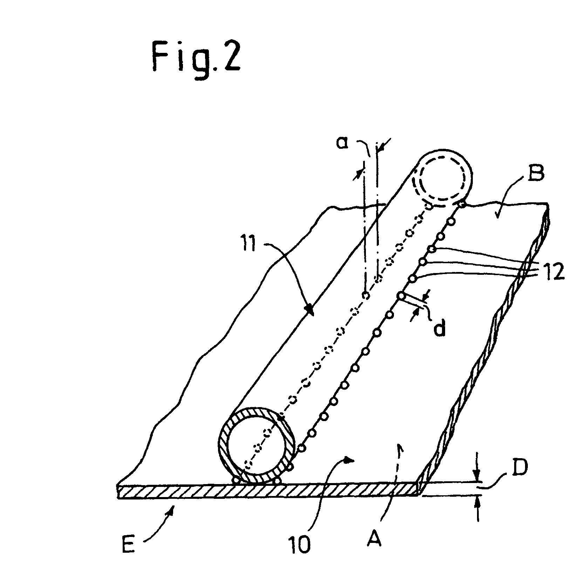

Das Absorberteil (Bezugszeichen 10 in Fig. 2) des erfindungsgemäßen Solarkollektorelements (Bezugszeichen E in Fig. 2) besteht aus einem Verbundmaterial mit einer hohen Selektivität des Absorptions- und Reflexionsgrades im solaren Wellenlängenbereich und im Bereich der Wärmestrahlung. Dieses Verbundmaterial besteht wiederum aus einem, insbesondere verformungsfähigen, bandförmigen Träger 1 aus Aluminium, einer auf einer Seite A auf den Träger 1 aufgetragenen Zwischenschicht 2 und einem auf die Zwischenschicht 2 aufgebrachten optisch wirksamen Mehrschichtsystem 3.

Der Träger 1 kann bevorzugt eine insbesondere regelmäßige Walzstruktur von in einer Vorzugsrichtung im wesentlichen parallel zueinander verlaufenden Rillen aufweisen. Durch eine solche Struktur ist es, wenn diese Rillen parallel zur Nord-Süd-Richtung ausgerichtet werden, möglich, dem Absorptionsvermögen eines erfindungsgemäßen Solarkollektorelementes E eine vom jeweiligen Winkel des im Tageslauf sich verändernden Standes der Sonne weitestgehend unabhängige Größe zu verleihen.

Ein nach DIN 5036, Teil 3 bestimmter Licht-Gesamtreflexionsgrad kann auf der Seite A des optischen Mehrschichtsystems 3 bevorzugt weniger als 5 % betragen.

Das Verbundmaterial kann bevorzugt als Coil mit einer Breite bis zu 1600 mm, vorzugsweise von 1250 mm, und mit einer Dicke D von etwa 0,1 bis 1,5 mm, vorzugsweise von etwa 0,2 bis 0,8 mm, zur Verarbeitung kommen, wobei das erfindungsgemäße Solarkollektorelement E daraus in einfacher Weise durch Ausstanzen eines plattenförmigen Absorberteils 10 und Verbindung desselben mit einem Rohr (Bezugszeichen 11 in Fig. 2) herstellbar ist. Der Träger 1 des Verbundmaterials kann dabei vorzugsweise eine Dicke D₁ von etwa 0,1 bis 0,7 mm besitzen.

Das Aluminium des Trägers 1 kann insbesondere eine höhere Reinheit als 99,0 % aufweisen, wodurch eine hohe Wärmeleitfähigkeit gefördert wird.

Die Zwischenschicht 2 besteht aus anodisch oxidiertem oder elektrolytisch geglänztem und anodisch oxidiertem Aluminium, das aus dem Trägermaterial gebildet ist.

Das Mehrschichtsystem 3 besteht aus drei Einzelschichten 4, 5, 6, wobei die beiden oberen Schichten 4, 5 oxidische Schichten sind und die unterste Schicht 6 eine auf die Zwischenschicht 2 aufgetragene metallische Schicht ist. Die oberste Schicht 4 des optischen Mehrschichtsystems 3 ist insbesondere eine siliciumoxidische Schicht der chemischen Zusammensetzung SiO_{y}. Die mittlere Schicht 5 ist eine chromoxidische Schicht der chemischen Zusammensetzung CrOₓ, und die unterste Schicht 6 besteht aus Gold, Silber, Kupfer, Chrom, Aluminium und/oder Molybdän.

Die Indizes x, y bezeichnen dabei ein stöchiometrisches oder nichtstöchiometrisches Verhältnis des oxidierten Stoffes zum Sauerstoff in den Oxiden. Das stöchiometrische oder nichtstöchiometrische Verhältnis x kann vorzugsweise im Bereich 0 < x < 3 liegen, während das stöchiometrische oder nichtstöchiometrische Verhältnis y Werte im Bereich 1 ≤ y ≤ 2 annehmen kann.

Dadurch, daß die beiden oberen Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse x, y ungestuft (also auch auf nichtstöchiometrische Werte der Indizes) einzustellen, wodurch die jeweiligen Schichteigenschaften variiert werden können.

Die oberste Schicht 4 des optischen Mehrschichtsystems 3 kann dabei mit Vorteil eine Dicke D₄ von mehr als 3 nm aufweisen. Bei dieser Dicke D₄ besitzt die Schicht bereits eine ausreichende Effizienz, wobei Zeit-, Material- und Energieaufwand jedoch nur geringe Werte annehmen. Ein oberer Grenzwert der Schichtdicke D₄ liegt unter diesem Gesichtspunkt bei etwa 500 nm. Ein für die mittlere Schicht 5 des optischen Mehrschichtsystems 3 unter den genannten Gesichtspunkten optimaler Wert ist eine minimale Dicke D₅ von mehr als 10 nm, maximal etwa 1 µm. Der entsprechende Wert für die unterste Schicht 6 liegt bei einer Dicke D₆ von mindestens 3 nm, maximal etwa 500 nm.

Die unterste Schicht 6 des optischen Mehrschichtsystems 3 sollte im Sinne einer hohen Effizienz bevorzugt eine höhere Reinheit als 99,5 % aufweisen. Die Schicht kann, wie bereits erwähnt, eine Sputterschicht oder eine durch Verdampfen, insbesondere durch Elektronenbombardement oder aus thermischen Quellen, erzeugte Schicht sein, so daß das gesamte optische Mehrschichtsystem 3 vorteilhafterweise aus in Vakuumfolge in einem kontinuierlichen Verfahren aufgetragenen Schichten 4, 5, 6 besteht.

Auf der dem optischen Mehrschichtsystem 3 abgewandten Seite B des bandförmigen Trägers 1 ist eine Unterschicht 7 aufgebracht, die - wie die Zwischenschicht 2 - aus anodisch oxidiertem oder elektrolytisch geglänztem und anodisch oxidiertem Aluminium besteht. Die Zwischenschicht 2 und die Unterschicht 7 können vorteilhafterweise gleichzeitig auf dem naßchemischen Weg erzeugt werden, wobei die Poren der Aluminiumoxidschicht in der letzten Phase der naßchemischen Prozeßkette weitestgehend durch eine Heißverdichtung verschlossen werden können, so daß eine dauerhaft beständige Oberfläche entsteht. Die Unterschicht 7 bietet somit - wie die Zwischenschicht 2 - einen mechanischen und korrosionshemmenden Schutz für den Träger 1.

Erfindungsgemäß ist es insbesondere möglich, den Schichtaufbau derart zu gestalten, daß der nach DIN 5036, Teil 3 bestimmte Licht-Gesamtreflexionsgrad auf der Seite A des optischen Mehrschichtsystems 3 bei einer Temperaturbelastung von 430 °C / 100 Stunden Änderungen von weniger als 7 %, vorzugsweise von weniger als 4 % aufweist.

Fig. 2 veranschaulicht den Gesamtaufbau eines erfindungsgemäßen Solarkollektorelementes E. Von dem Solarkollektorelement E sind in der Zeichnung schematisiert das Absorberteil 10 und das Rohr 11 für eine Wärmeträgerflüssigkeit dargestellt. Das Absorberteil 10 besteht aus dem Verbundmaterial mit dem aus Aluminium bestehenden Träger 1 und dem aus drei Schichten 4, 5, 6 aufgebauten Mehrschichtsystem 3, wie dies vorstehend erläutert wurde. Durch das in umweltfreundlicher und kostengünstiger Weise herstellbare Absorberteil 10 wird eine hohe Lichtabsorption und Wärmeableitung an das Rohr 11 erreicht, wobei unter den thermisch stark beanspruchenden Betriebsbedingungen des Kollektors eine vergleichsweise lange Lebensdauer gewährleistet werden kann.

Zu Letzterem trägt auch die Art der Verbindung zwischen dem Absorberteil 10 und dem insbesondere aus Kupfer bestehenden Rohr 11 bei, die mittels eines Laserschweißverfahrens, insbesondere in einer Ausführung als Impulsschweißverfahren, realisiert ist. Das Laserschweißen ist ein Schmelzschweißverfahren, d.h. die zu verbindenden Teile werden unter Einwirkung der Laserstrahlung geschmolzen. Eine Besonderheit besteht dabei in der hohen Leistungsdichte und beim Impulsschweißen in der mit der kurzen Einwirkzeit verbundenen schnellen Abkühlung. Da das Laserverschweißen des Absorberteils 10 mit dem Rohr 11 bevorzugt ohne Zusatzstoff durchgeführt wird, besteht die entstehende stoffschlüssige Verbindung zwischen den beiden zu verbindenden Teilen nur aus den jeweiligen Werkstoffen des Absorberteils 10 und des Rohres 11, wobei aufgrund des niedrigeren Schmelzpunktes des Aluminiums auf dem Absorberteil 10 tropfenförmige, vorwiegend aus Aluminium bestehende, erstarrte Schmelzkügelchen 12 gebildet sind und das Aluminium in das Kupfer des Rohres 11 eindiffundiert ist. Die Schmelzkügelchen 12 bewirken die Überbrückung eines eventuell vorhandenen Spaltes bzw. Luftpolsters zwischen Absorberteil 10 und Rohr 11. Damit eine optimale Verbindung entsteht, sollte unter Beachtung der vorstehend genannten Kriterien die Leistungsdichte des Lasers beim Schweißen 10⁷ W/cm², vorzugsweise 10⁶ W/cm², nicht übersteigen. Die Gesamtenergie für einen Schweißpunkt sollte über einen Zeitraum von bis zu etwa 10 ms, vorzugsweise zeitlich unterteilt, einwirken. Neben den bereits genannten Kriterien sind die tatsächliche räumliche und zeitliche Intensitätsverteilung am Wirkort zu beachten (Spiking, Hot spots).

Insbesondere können dabei das Rohr 11 und das Absorberteil 10 - wie in Fig. 2 dargestellt - längs ihrer Stoßstelle durch beidseitig des Rohres 11 verlaufende Schweißnähte verbunden sein, die aus voneinander beabstandeten (Abstand a), insbesondere regelmäßig angeordneten Schweißpunkten (Schmelzkügelchen 12) gebildet sind.

Da bei Betrieb eines Solarkollektors der Wärmeübergang vom Absorberteil 10 an das Rohr 11 vorwiegend an den Schweißpunkten erfolgt, bestimmen die Größe der Schmelzkügelchen 12 und der Abstand a zwischen den Schmelzkügelchen 12 den Kollektorwirkungsgrad entscheidend mit. Andererseits wirkt der Wärmewiderstand des Absorberteils 10 in dessen Erstreckungsebene limitierend auf den Kollektorwirkungsgrad. Dieser Wärmewiderstand des Absorberteils 10 wird dabei im wesentlichen einerseits durch die Wärmeleitfähigkeit des Verbundmaterials, vor allem die des Trägers 1, und andererseits durch die Dicke D des Absorberteils 10 bestimmt. Der optimale Abstand a zwischen den Schmelzkügelchen 12 richtet sich bei einem vorgegebenen Verbundmaterial des Absorberteiles 10 und fester Größe (Durchmesser d) der Schmelzkügelchen 12 somit nach dessen Dicke D. Bei einem Träger 1 aus Aluminium, einer Dicke D des Absorberteils von etwa 0,3 bis 0,8 mm und einem Durchmesser d der Schmelzkügelchen 12 von etwa 0,2 bis 3,2 mm liegt dieser optimale Abstand a (Abstand der Mitten der Schmelzkügelchen 12) bei etwa 0,5 bis 2,5 mm. Je größer die Dicke D des Absorberteiles D ist, desto geringer muß der Abstand a zwischen den Schweißpunkten gewählt werden.

Die vorliegende Erfindung ist nicht auf das dargestellte Ausführungsbeispiel beschränkt, sondern umfaßt alle im Sinne der Erfindung gleichwirkenden Mittel und Maßnahmen. So ist es beispielsweise auch möglich, daß die unterste Schicht 6 des optischen Mehrschichtsystems 3 aus mehreren übereinander angeordneten Teilschichten aus Gold, Silber, Kupfer, Chrom, Aluminium und/oder Molybdän besteht.

Wie bereits erwähnt, kann die oberste Schicht alternativ auch aus Fluoriden oder Nitriden bestehen. Als Trägermaterial besitzt - wie bekannt - auch Kupfer eine ausgezeichnete Eignung, wenngleich mit Aluminium bei etwa gleichwertigen Wärmeübergangswerten, ohne Sicken vorsehen zu müssen, eine höhere Steifigkeit erzielt wird.

Mit Aluminiumband als Träger 1 stehen eine Vielzahl unterschiedlicher gewalzter Oberflächen zur Verfügung, insbesondere solche mit Rillenstruktur, die in vorteilhafter Weise als Absorberverbundmaterial die Winkelabhängigkeit des Absorptionsvermögens bei geeigneter Ausrichtung zum Sonnenlauf minimieren und homogenisieren können.

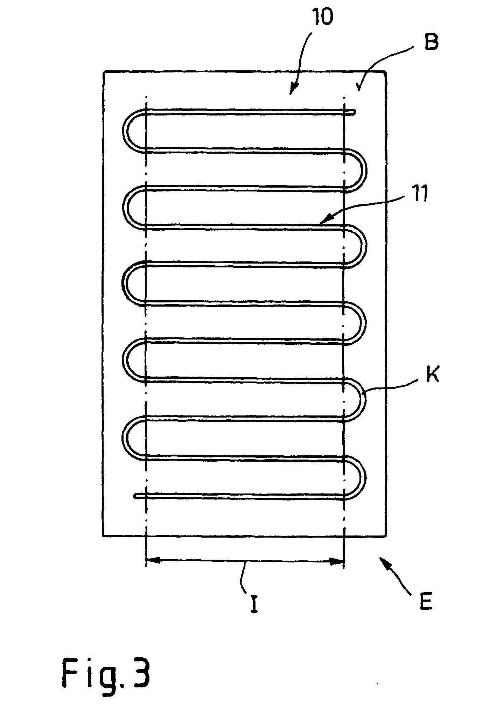

Des weiteren kann der Fachmann die Erfindung durch zusätzliche vorteilhafte Maßnahmen ergänzen, ohne daß der Rahmen der Erfindung verlassen wird. So kann das Rohr 11 insbesondere gerade oder, wie in Fig. 3 dargestellt, mäanderförmig auf dem Absorberteil 10 verlegt sein. Bei einer mäanderförmigen Verlegung kann sich die Verschweißung dabei auf gerade Rohrbereiche I beschränken, während gekrümmte Rohrbereiche K nicht verschweißt sind.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Träger
- 2: Zwischenschicht
- 3: optisches Mehrschichtsystem
- 4: obere Schicht von 3
- 5: mittlere Schicht von 3
- 6: untere Schicht von 3
- 7: Unterschicht
- 10: Absorberteil
- 11: Rohr
- 12: Schmelzkügelchen

- A: Oberseite von 10 (Seite von 3)
- a: gegenseitiger Mittenabstand von 12
- B: Unterseite von 10 (3 abgewandt)
- D: (Gesamt-)Dicke
- d: Durchmesser von 12
- D₁: Dicke von 1
- D₄: Dicke von 4
- D₅: Dicke von 5
- D₆: Dicke von 6
- E: Solarkollektorelement
- I: gerade Bereiche von 11
- K: gekrümmte Bereiche von 11

## Patentansprüche

1. Solarkollektorelement mit einem Absorberteil (10) und mit einem mit dem Absorberteil (10) auf einer ersten Seite (B) angeordneten Rohr (11) für eine Wärmeträgerflüssigkeit, wobei das Absorberteil (10) aus einem Verbundmaterial mit einem metallischen Träger (1) und mit einer auf einer zweiten Seite (A) auf dem Träger (1) befindlichen optisch wirksamen Beschichtung besteht, wobei die Beschichtung aus einem aus drei Schichten (4, 5, 6) aufgebauten Mehrschichtsystem (3) besteht, dessen oberste Schicht (4) eine dielektrische Schicht, vorzugsweise eine oxidische, fluoridische oder nitridische Schicht der chemischen Zusammensetzung MeO_{z}, MeFᵣ, MeNₛ, mit einem Brechungsindex n < 1,8, und dessen mittlere Schicht (5) eine chromoxidische Schicht der chemischen Zusammensetzung CrOₓ ist und dessen unterste Schicht aus Gold, Silber, Kupfer, Chrom, Aluminium und/oder Molybdän besteht, wobei die Indizes x, z, r und s ein stöchiometrisches oder nichtstöchiometrisches Verhältnis in den Oxiden, Fluoriden oder Nitriden bezeichnen,
**dadurch gekennzeichnet, daß** das Absorberteil (10) und das Rohr (11) auf der ersten Seite (B) längs einer zwischen ihnen ausgebildeten Stoßstelle über eine stoffschlüssige, mittels eines Laserschweißverfahrens hergestellte Verbindung miteinander verbunden sind, die durch beidseitig des Rohres (11) verlaufende Schweißnähte gebildet ist, welche aus voneinander beabstandeten (a) Schweißpunkten (12) bestehen.

2. Solarkollektorelement nach Anspruch 1,
**dadurch gekennzeichnet, daß** die oberste Schicht (4) des optischen Mehrschichtsystems (3) eine siliciumoxidische Schicht der chemischen Zusammensetzung SiO_{y} ist, wobei der Index y ein stöchiometrisches oder nichtstöchiometrisches Verhältnis bezeichnet.

3. Solarkollektorelement nach Anspruch 1 oder 2,
**gekennzeichnet durch** eine unter dem optischen Mehrschichtsystem (3) auf den Träger (1) aufgebrachte Zwischenschicht (2).

4. Solarkollektorelement nach einem der Ansprüche 1 bis 3,
**gekennzeichnet durch** eine auf der dem optischen Mehrschichtsystem (3) abgewandten Seite (B) auf den Träger (1) aufgebrachte Unterschicht (7).

5. Solarkollektorelement nach einem der Ansprüche 1 bis 4,
**dadurch gekennzeichnet, daß** derTräger(1)ausAluminium besteht.

6. Solarkollektorelement nach Anspruch 5,
**dadurch gekennzeichnet, daß** das Aluminium des Trägers (1) eine höhere Reinheit als 99,0 % aufweist.

7. Solarkollektorelement nach einem der Ansprüche 3 bis 6,
**dadurch gekennzeichnet, daß** die Zwischenschicht (2) aus anodisch oxidiertem oder elektrolytisch geglänztem und anodisch oxidiertem Aluminium besteht.

8. Solarkollektorelement nach einem der Ansprüche 4 bis 7,
**dadurch gekennzeichnet, daß** die Unterschicht (7) aus anodisch oxidiertem oder elektrolytisch geglänztem und anodisch oxidiertem Aluminium besteht.

9. Solarkollektorelement nach einem der Ansprüche 1 bis 8,
**dadurch gekennzeichnet, daß** der Träger (1) eine insbesondere regelmäßige Walzstruktur von in einer Vorzugsrichtung im wesentlichen parallel zueinander verlaufenden Rillen aufweist.

10. Solarkollektorelement nach einem der Ansprüche 1 bis 4,
**dadurch gekennzeichnet, daß** der Träger (1) aus Kupfer besteht.

11. Solarkollektorelement nach einem der Ansprüche 1 bis 10,
**dadurch gekennzeichnet, daß** das stöchiometrische oder nichtstöchiometrische Verhältnis x im Bereich 0 < x < 3 liegt.

12. Solarkollektorelement nach einem der Ansprüche 2 bis 11,
**dadurch gekennzeichnet, daß** das stöchiometrische oder nichtstöchiometrische Verhältnis y im Bereich 1 ≤ y ≤ 2 liegt.

13. Solarkollektorelement nach einem der Ansprüche 1 bis 12,
**dadurch gekennzeichnet, daß** die unterste Schicht (6) des optischen Mehrschichtsystems (3) aus mehreren übereinander angeordneten Teilschichten aus Gold, Silber, Kupfer, Chrom, Aluminium und/oder Molybdän besteht.

14. Solarkollektorelement nach einem der Ansprüche 1 bis 13,
**dadurch gekennzeichnet, daß** die beiden oberen Schichten (4, 5) des optischen Mehrschichtsystems (3) Sputterschichten, insbesondere durch Reaktivsputtem erzeugte Schichten, CVD- oder PECVD-Schichten oder durch Verdampfen, insbesondere durch Elektronenbombardement oder aus thermischen Quellen, erzeugte Schichten sind.

15. Solarkollektorelement nach einem der Ansprüche 1 bis 14,
**dadurch gekennzeichnet, daß** die metallische Schicht des optischen Mehrschichtsystems (3) eine Sputterschicht oder eine durch Verdampfen, insbesondere durch Elektronenbombardement oder aus thermischen Quellen, erzeugte Schicht ist.

16. Solarkollektorelement nach einem der Ansprüche 1 bis 15,
**dadurch gekennzeichnet, daß** das optische Mehrschichtsystem (3) aus in Vakuumfolge in einem kontinuierlichen Verfahren aufgetragenen Schichten besteht.

17. Solarkollektorelement nach einem der Ansprüche 1 bis 16,
**dadurch gekennzeichnet, daß** die oberste Schicht (4) des optischen Mehrschichtsystems (3) eine Dicke (D₄) von mehr als 3 nm und maximal etwa 500 nm aufweist.

18. Solarkollektorelement nach einem der Ansprüche 1 bis 17,
**dadurch gekennzeichnet, daß** die mittlere Schicht (5) des optischen Mehrschichtsystems (3) eine Dicke (D₅) von mehr als 10 nm und maximal etwa 1µm aufweist.

19. Solarkollektorelement nach einem der Ansprüche 1 bis 18,
**dadurch gekennzeichnet, daß** die unterste Schicht (6) des optischen Mehrschichtsystems (3) eine Dicke (D₆) von mindestens 3 nm und maximal etwa 500 nm aufweist.

20. Solarkollektorelement nach einem der Ansprüche 1 bis 19,
**dadurch gekennzeichnet, daß** ein nach DIN 5036, Teil 3 bestimmter Licht-Gesamtreflexionsgrad auf der Seite (A) des optischen Mehrschichtsystems (3) weniger als 5 % beträgt.

21. Solarkollektorelement nach einem der Ansprüche 1 bis 20,
**dadurch gekennzeichnet, daß** ein nach DIN 5036, Teil 3 bestimmter Licht-Gesamtreflexionsgrad auf der Seite (A) des optischen Mehrschichtsystems (3) bei einer Temperaturbelastung von 430 °C / 100 Stunden Änderungen von weniger als 7 %, vorzugsweise von weniger als 4 %, aufweist.

22. Solarkollektorelement nach einem der Ansprüche 1 bis 21,
**dadurch gekennzeichnet, daß** das Absorberteil (10) eine plattenförmige Gestalt und eine Dicke (D) von etwa 0,1 bis 1,5 mm, vorzugsweise von etwa 0,2 bis 0,8 mm aufweist.

23. Solarkollektorelement nach einem der Ansprüche 1 bis 22,
**dadurch gekennzeichnet, daß** das Rohr (11) aus Kupfer besteht.

24. Solarkollektorelement, insbesondere nach einem der Ansprüche 1 bis 23,
**dadurch gekennzeichnet, daß** das Absorberteil (10) und das Rohr (11) , mittels Impulsschweißverfahren, miteinander verbunden sind.

25. Solarkollektorelement nach Anspruch 24,
**dadurch gekennzeichnet, daß** die stoffschlüssige Verbindung zwischen dem Absorberteil (10) und dem Rohr (11) nur aus den jeweiligen Werkstoffen des Absorberteils (10) und des Rohres (11) besteht.

26. Solarkollektorelement nach Anspruch 24 oder 25,
**dadurch gekennzeichnet, daß** die stoffschlüssige Verbindung zwischen dem Absorberteil (10) und dem Rohr (11) bei einem Absorberteil (10) mit einem Träger (1) aus Aluminium und einem aus Kupfer bestehenden Rohr (11) durch auf dem Absorberteil (10) erstarrte, vorwiegend aus Aluminium bestehende, Schmelzkügelchen (12) und durch eine Diffusion des Aluminiums in das Kupfer des Rohres (11) gebildet ist.

27. Solarkollektorelement nach Anspruch 26 ,
**dadurch gekennzeichnet, daß** das Rohr (11) und das Absorberteil bei einem aus Aluminium bestehenden Träger (1), einer Dicke (D) des Absorberteils von etwa 0,3 bis 0,8 mm und einem Durchmesser (d) der Schmelzkügelchen (12) von etwa 0,2 bis 3,2 mm ein Abstand (a) zwischen den Mitten der Schmelzkügelchen (12) im Bereich von etwa 0,5 bis 2,5 mm liegt.

## Claims

1. Solar collector element having an absorber part (10) and having a tube (11), which is arranged with the absorber part (10) on a first side (B), for a heat-transfer liquid, the absorber part (10) consisting of a composite material having a metallic substrate (1) and having an optically active coating on the substrate (1) on a second side (A), the coating comprising a multilayer system (3) which is composed of three layers (4, 5, 6), of which the top layer (4) is a dielectric layer, preferably an oxide, fluoride or nitride layer of chemical composition MeO_{z}, MeFᵣ, MeNₛ, having a refractive index n < 1.8, and of which the middle layer (5) is a chromium oxide layer of chemical composition CrOₓ, and of which the bottom layer consists of gold, silver, copper, chromium, aluminium and/or molybdenum, the indices x, z, r and s indicating a stoichiometric or non-stoichiometric ratio in the oxides, fluorides or nitrides, **characterized in that** the absorber part (10) and the tube (11), on the first side (B), are connected to one another by means of a material-to-material bond which is produced by means of a laser welding process and is formed by weld seams that run on both sides of the tube (11) and comprise weld spots (12) which are spaced apart from one another (a).

2. Solar collector element according to Claim 1, **characterized in that** the top layer (4) of the optical multilayer system (3) is a silicon oxide layer of chemical composition SiO_{y}, the index y indicating a stoichiometric or non-stoichiometric ratio.

3. Solar collector element according to Claim 1 or 2, **characterized by** an intermediate layer (2) which is applied to the substrate (1) beneath the optical multilayer system (3).

4. Solar collector element according to one of Claims 1 to 3, **characterized by** a lower layer (7) which is applied to the substrate (1) on the side (B) which is remote from the optical multilayer system (3).

5. Solar collector element according to one of Claims 1 to 4, **characterized in that** the substrate (1) consists of aluminium.

6. Solar collector element according to Claim 5, **characterized in that** the aluminium of the substrate (1) is more than 99.0% pure.

7. Solar collector element according to one of Claims 3 to 6, **characterized in that** the intermediate layer (2) consists of anodically oxidized or electrolytically brightened and anodically oxidized aluminium.

8. Solar collector element according to one of Claims 4 to 7, **characterized in that** the lower layer (7) consists of anodically oxidized or electrolytically brightened and anodically oxidized aluminium.

9. Solar collector element according to one of Claims 1 to 8, **characterized in that** the substrate (1) has an in particular regular rolled structure of grooves which run substantially parallel to one another in a preferred direction.

10. Solar collector element according to one of Claims 1 to 4, **characterized in that** the substrate (1) consists of copper.

11. Solar collector element according to one of Claims 1 to 10, **characterized in that** the stoichiometric or non-stoichiometric ratio x lies in the range 0 < x < 3.

12. Solar collector element according to one of Claims 2 to 11, **characterized in that** the stoichiometric or non-stoichiometric ratio y lies in the range 1 ≤ y ≤ 2.

13. Solar collector element according to one of Claims 1 to 12, **characterized in that** the bottom layer (6) of the optical multilayer system (3) consists of a plurality of partial layers, arranged one above the other, of gold, silver, copper, chromium, aluminium and/or molybdenum.

14. Solar collector element according to one of Claims 1 to 13, **characterized in that** the two upper layers (4, 5) of the optical multilayer system (3) are sputtered layers, in particular layers produced by reactive sputtering, CVD or PECVD layers or layers produced by vaporization, in particular by electron bombardment or from thermal sources.

15. Solar collector element according to one of Claims 1 to 14, **characterized in that** the metallic layer of the optical multilayer system (3) is a sputtered layer or a layer produced by vaporization, in particular by electron bombardment or from thermal sources.

16. Solar collector element according to one of Claims 1 to 15, **characterized in that** the optical multilayer system (3) comprises layers which are applied in vacuum order in a continuous process.

17. Solar collector element according to one of Claims 1 to 16, **characterized in that** the top layer (4) of the optical multilayer system (3) has a thickness (D₄) of more than 3 nm and at most approximately 500 nm.

18. Solar collector element according to one of Claims 1 to 17, **characterized in that** the middle layer (5) of the optical multilayer system (3) has a thickness (D₅) of more than 10 nm and at most approximately 1 µm.

19. Solar collector element according to one of Claims 1 to 18, **characterized in that** the bottom layer (6) of the optical multilayer system (3) has a thickness (D₆) of at least 3 nm and at most approximately 500 nm.

20. Solar collector element according to one of Claims 1 to 19, **characterized in that** a total light reflectivity, determined in accordance with DIN 5036, part 3, on side (A) of the optical multilayer system (3) is less than 5%.

21. Solar collector element according to one of Claims 1 to 20, **characterized in that** a total light reflectivity, determined in accordance with DIN 5036, part 3, on side (A) of the optical multilayer system (3) under a thermal load of 430°C/100 hours undergoes changes of less than 7%, preferably of less than 4%.

22. Solar collector element according to one of Claims 1 to 21, **characterized in that** the absorber part (10) is of plate-like form and has a thickness (D) of approximately 0.1 to 1.5 mm, preferably of approximately 0.2 to 0.8 mm.

23. Solar collector element according to one of Claims 1 to 22, **characterized in that** the tube (11) consists of copper.

24. Solar collector element, in particular according to one of Claims 1 to 23, **characterized in that** the absorber part (10) and the tube (11) are connected to one another by means of a pulse welding process.

25. Solar collector element according to Claim 24, **characterized in that** the material-to-material bond between the absorber part (10) and the tube (11) consists only of the respective materials of the absorber part (10) and of the tube (11).

26. Solar collector element according to Claim 24 or 25, **characterized in that** the material-to-material bond between the absorber part (10) and the tube (11), in the case of an absorber part (10) having a substrate (1) made from aluminium and a tube (11) consisting of copper, is formed by small molten balls (12) which have solidified on the absorber part (10) and predominantly consist of aluminium and by diffusion of the aluminium into the copper of the tube (11).

27. Solar collector element according to Claim 26, **characterized in that** the tube (11) and the absorber part, in the case of a substrate (1) consisting of aluminium, a thickness (D) of the absorber part of approximately 0.3 to 0.8 mm and a diameter (d) of the small molten balls (12) of approximately 0.2 to 3.2 mm, have a distance (a) of approximately 0.5 to 2.5 mm between the centres of the small molten balls (12).

## Revendications

1. Elément capteur solaire comportant une partie formant absorbeur (10) et un tube (11), disposé avec la partie formant absorbeur (10) sur une première face (B), destiné à un fluide caloporteur, la partie formant absorbeur (10) étant constituée d'un matériau composite avec un support métallique (1) et un revêtement optiquement actif, se trouvant sur une deuxième face (A) sur le support (1), le revêtement étant constitué d'un système multicouche (3) formé de trois couches (4, 5, 6), dont la couche la plus supérieure (4) est une couche diélectrique, de préférence une couche d'oxyde, de fluorure ou de nitrure ayant la composition chimique MeO_{z},MeFᵣ,MeNₛ et un indice de réfraction n < 1,8, et dont la couche centrale (5) est constituée d'une couche d'oxyde de chrome de composition chimique CrO_{X}, et dont la couche la plus inférieure est constituée d'or, d'argent, de cuivre, de chrome, d'aluminium et/ou de molybdène, les indices x, z, r et s désignant un rapport stoechiométrique ou non stoechiométrique dans les oxydes, les fluorures ou les nitrures, **caractérisé en ce que** la partie formant absorbeur (10) et le tube (11) sont, sur la première face (B), assemblés l'un à l'autre le long d'une zone de contact formée entre eux, par l'intermédiaire d'un assemblage par liaison de matière, réalisé par un procédé de soudage laser; assemblage qui est formé par des points de soudage, courant sur les deux côtés du tube, et qui sont constitués de points de soudage (12) distants d'une distance (a) les uns des autres.

2. Elément capteur solaire selon la revendication 1, **caractérisé en ce que** la couche la plus supérieure (4) du système multicouche optique (3) est une couche d'oxyde de silicium de composition chimique SiO_{Y}, l'indice y désignant un rapport stoechiométrique ou non-stoechiométrique.

3. Elément capteur solaire selon la revendication 1 ou 2, **caractérisé par** une couche intermédiaire (2) appliquée sur le support (1) en dessous du système multicouche optique (3).

4. Elément capteur solaire selon l'une des revendications 1 à 3, **caractérisé par** une sous-couche (7) appliquée sur le support (1) sur la face (B) opposée au système multicouche optique (3).

5. Elément capteur solaire selon l'une des revendications 1 à 4, **caractérisé en ce que** le support (1) est constitué d'aluminium.

6. Elément capteur solaire selon la revendication 5, **caractérisé en ce que** l'aluminium du support (1) a une pureté supérieure à 99,0 %.

7. Elément capteur solaire selon l'une des revendications 3 à 6, **caractérisé en ce que** la couche intermédiaire (2) est constituée d'aluminium ayant subi une oxydation anodique ou un polissage électrolytique et une oxydation anodique.

8. Elément capteur solaire selon l'une des revendications 4 à 7, **caractérisé en ce que** la sous-couche (7) est constituée d'aluminium ayant subi une oxydation anodique ou un polissage électrolytique et une oxydation anodique.

9. Elément capteur solaire selon l'une des revendications 1 à 8, **caractérisé en ce que** le support (1) présente une structure laminée particulièrement régulière de rainures courant d'une manière essentiellement parallèle les unes aux autres dans une direction préférentielle.

10. Elément capteur solaire selon l'une des revendications 1 à 4, **caractérisé en ce que** le support (1) est constitué de cuivre.

11. Elément capteur solaire selon l'une des revendications 1 à 10, **caractérisé en ce que** le rapport stoechiométrique ou non stoechiométrique x est compris dans la plage 0 < x < 3.

12. Elément capteur solaire selon l'une des revendications 2 à 11, **caractérisé en ce que** le rapport stoechiométrique ou non-stoechiométrique y est compris dans la plage 1 ≤ y ≤ 2.

13. Elément capteur solaire selon l'une des revendications 1 à 12, caractérisé en que la couche la plus inférieure (6) du système multicouche optique (3) est constituée de plusieurs couches partielles, disposées les unes au-dessus des autres, en or, argent, cuivre, chrome, aluminium et/ou molybdène.

14. Elément capteur solaire selon l'une des revendications 1 à 13, **caractérisé en ce que** les deux couches supérieures (4, 5) du système multicouche optique (3) sont des couches produit par pulvérisation cathodique, en particulier par pulvérisation cathodique réactive, des couches CVD ou PECVD, ou des couches produites par évaporation, en particulier par bombardement électronique ou à partir de sources thermiques.

15. Elément capteur solaire selon l'une des revendications 1 à 14, **caractérisé en ce que** la couche métallique du système multicouche optique (3) est une couche obtenue par pulvérisation cathodique, ou une couche produite par évaporation, en particulier par bombardement électronique ou à partir de sources thermiques.

16. Elément capteur solaire selon l'une des revendications 1 à 15, **caractérisé en ce que** le système multicouche optique (3) est constitué de couches appliquées selon un séquence d'opérations sous vide, par un procédé continu.

17. Elément capteur solaire selon l'une des revendications 1 à 16, **caractérisé en ce que** la couche supérieure (4) du système multicouche optique (3) présente une épaisseur (D₄) supérieure à 3 nm et au maximum égale à environ 500 nm.

18. Elément capteur solaire selon l'une des revendications 1 à 17, **caractérisé en ce que** la couche centrale (5) du système multicouche optique (3) a une épaisseur (D₅) supérieure à 10 nm et au maximum égale à environ 1 µm.

19. Elément capteur solaire selon l'une des revendications 1 à 18, **caractérisé en ce que** la couche la plus inférieure (6) du système multicouche optique (3) a une épaisseur (D₆) d'au moins 3 nm et au maximum égale à environ 500 nm.

20. Elément capteur solaire selon l'une des revendications 1 à 19, **caractérisé en ce que** le facteur de réflexion totale de la lumière sur la face (A) du système multicouche optique (3), déterminé selon DIN 5036, Partie 3, est inférieure à 5 %.

21. Elément capteur solaire selon l'une des revendications 1 à 20, **caractérisé en ce que** le facteur de réflexion totale de la lumière sur la face (A) du système multicouche optique (3), déterminé selon DIN 5036, Partie 3, présente pour une contrainte de température de 430°C/100 heures des variations inférieures à 7 %, de préférence inférieures à 4 %.

22. Elément capteur solaire selon l'une des revendications 1 à 21, **caractérisé en ce que** la partie formant absorbeur (10) a la forme d'une plaque et présente une épaisseur (D) d'environ 0,1 à 1,5 mm, de préférence d'environ 0,2 à 0,8 mm.

23. Elément capteur solaire selon l'une des revendications 1 à 22, **caractérisé en ce que** le tube (11) est constitué de cuivre.

24. Elément capteur solaire, en particulier selon l'une des revendications 1 à 23, **caractérisé en ce que** la partie formant absorbeur (10) et le tube (11) sont assemblés l'un à l'autre par un procédé de soudage par impulsions.

25. Elément capteur solaire selon la revendication 24, **caractérisé en ce que** l'assemblage par liaison de matière entre la partie formant absorbeur (10) et le tube (11) n'est constitué que des matériaux de la partie formant absorbeur (10) et du tube (11).

26. Elément capteur solaire selon la revendication 24 ou 25, caractérisé en que l'assemblage par liaison de matière entre la partie formant absorbeur (10) et le tube (11), pour une partie formant absorbeur (10) comportant un support (1) en aluminium et un tube (11) constitué de cuivre, est formé par des microsphères de fusion (12), solidifiées sur la partie formant absorbeur (1) et pour l'essentiel constituées d'aluminium, et par une diffusion de l'aluminium dans le cuivre du tube (11).

27. Elément capteur solaire selon la revendication 26, **caractérisé en ce que** le tube (11) et la partie formant absorbeur, pour un support (1) constitué d'aluminium, une épaisseur (D) de la partie formant absorbeur d'environ 0,3 à 0,8 mm et un diamètre (d) des microsphères de fusion (12) d'environ 0,2 à 3,2 mm, présentent une distance (a) entre les centres des microsphères de fusion (12) comprise dans la plage d'environ 0,5 à 2,5 mm.
